# EUROPEAN PATENT SPECIFICATION

(11) **EP 0 740 602 B1**
(45) Date of publication and mention of the grant of the patent: **14.04.1999**
(21) Application number: 95906397.5
(22) Date of filing: 20.01.1995
(51) Int. Cl.: B29C 44/04, B29C 41/04

(54) **A METHOD OF ROTATIONAL MOULDING AND ROTATIONALLY MOULDED PRODUCTS**
ROTATIONSFORMVERFAHREN UND NACH DEM VERFAHREN HERGESTELLTE FORMKÖRPER
PROCEDE DE MOULAGE ROTATIF ET PRODUITS MOULES AU MOYEN DU PROCEDE

(30) Priority: 22.01.1994 GB 9401214
(43) Date of publication of application: 06.11.1996
(73) Proprietor: The Queen's University of Belfast, Belfast BT7 1NN, Northern Ireland (GB)
(72) Inventor: CRAWFORD, Robert, James, Hillsborough, County Antrim BT26 6PH (GB); NUGENT, Paul, James, Belfast BT9 6JG (GB)
(74) Representative: Downey, William Gerrard
(86) International application number: GB9500112
(87) International publication number: WO9519877

(56) References cited:
- CA-A- 983 226
- US-A- 3 712 872

## Description

The present invention relates to a method of rotational moulding and to rotationally moulded products produced thereby.

The method is particularly, but not exclusively, applicable to the production of a product having a solid skin with a foamed core. It is extendable to any multiple layer product. Multiple layer products have a number of uses in rotationally moulded products, for example, solid skin with a foamed core or polyethylene with a nylon barrier for permeation resistance. The method of adding the second layer can be varied but invariably involves a mechanical device (e.g. dump-box) or an extra processing step. This often renders the process uneconomic due to complexity or delay. A second layer of foam, for example, polyurethane, can also be added to a part after production.

A single step process which allows the addition and natural separation of multiple layers has been developed. In the case of foamed sections, the process involves a mixture of powdered polymer and granules/large particles which have been compounded with blowing agent. The powder sticks to the mould first and forms a solid skin with the granules sticking later and forming the second foamed layer. A process of this type is described in Canadian Patent No. 983,226. However, there are problems with this type of process because a complete separation of the two layers cannot be reliably achieved. Typically some of the larger particles stick to the mould, foam at the surface and so flaw the solid skin.

It is an object of the embodiments of the invention to overcome this problem.

According to the present invention there is provided a method of rotational moulding in which a granular moulding material is mixed with another moulding material and moulded together in a rotational mould whereby during moulding the materials are separated into different but adjacent layers characterised by the steps of coating the granules of the granular moulding material, prior to mixing with the second moulding material, whereby during moulding the coating promotes separation between the granular moulding material and the other moulding material to form the different but adjacent layers, the coating being absorbed in the materials during moulding.

No limitation as to size, shape or consistency is intended by the use of the term granules except that the granules should be as large or larger than the largest particle size of the material in powdered form.

This promoted separation avoids the formation of surface flaws caused by granules sticking to the mould surface penetrating the layer produced by the other material and foaming in it.

The second material is advantageously in the form of a powder.

The material used in either the powder or the granules/large particles may be any polymeric material. The coating may be any material which prevents the granules from sticking to the mould or other material during processing. The coated granules may contain foaming agents to produce a foamed structure. The coated granules may be of a different material to the powder in order to produce a two phase structure. The proportions of powder to granules may be varied to alter the ratio of skin to core thickness.

The invention also comprises any moulded products produced by the above method.

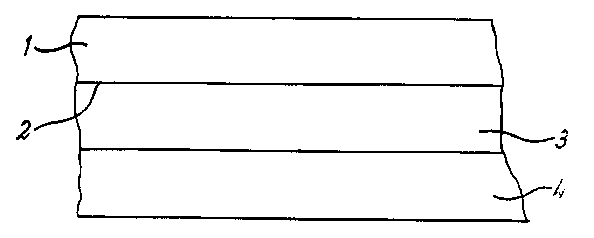

In order that the invention may be more clearly understood, one embodiment thereof will now be described by way of example with reference to the single figure of the accompanying drawing which shows diagrammatically a part of a rotational mould and moulded article disposed therein.

In the method of the invention as applied to a two layer product, the granules of a granular synthetic plastics polymeric material are coated with a coating to prevent them sticking to the mould or other materials. This coated material is mixed with another synthetic plastics polymeric material in powdered form. The granular material may be treated with a blowing agent if a foamed layer is required. Otherwise no blowing agent is necessary. The mixed materials are introduced into a rotational mould and moulded in the normal way. The powdered material migrates during moulding towards the mould surface and the granular material migrates during moulding to the interior of the mould, thus producing a two layer product where the layers are intimately attached to one another. In the drawing the mould part is referenced 1 and its inner surface 2. The two layers formed from the powdered and granular materials respectively are referenced 3 and 4.

The coating prevents or inhibits the granules sticking to the mould surface, where they can cause flaws in the surface of the moulded product which is the surface of the layer 3 formed from the powdered material, or to the material of the layer 3. The coating may consist of anything which will inhibit sticking. It may consist, for example, of an inorganic material such as a ceramic dust, paint or high temperature barrier. After performing its anti-stick function during moulding the coating is absorbed into the moulding materials. Absorption takes place as melting occurs or as foaming occurs when the granules have been treated with a blowing agent to produce layer 4 as a foamed layer. More than two layers may be produced as desired. The ratio of the thicknesses of the layers may be varied by varying the amounts of materials in the respective layers. The materials in the layers may be the same or different to produce a multiphase structure. Any suitable moulding material may be used but polyethylene, polypropylene and polyvinylchloride are preferred.

Some examples of moulding mixtures and processes are as follows:-

### Example 1

600g of linear polyethylene granules which were pre-compounded with 1% blowing agent (diameter 2mm, length 3mm on average) were coated with a fine layer of ceramic dust. This was a 94% alumina material with an average particle size < 10 microns. These coated granules were added to 400g of standard polyethylene powder used for rotational moulding. The powder particle size was < 300 microns although material up to 500 microns has been used.

The mixture (total weight 1Kg) was placed inside a 300 x 300 x 20mm mould cavity which was then clamped shut. This was heated in an oven at 300°C until the internal temperature was 205°C (the value of this temperature will vary according to the level of foaming required).

During the moulding process, the powdered material sticks to the mould first and forms a solid layer. The coated material is prevented from sticking until this layer is almost complete. The coated material forms a second layer, absorbing the ceramic dust and foams at the retiration point of the blowing agent (approximately 180°C in this case). The final moulded part consists of solid plastic (2.5mm), foamed core (14mm) and solid plastic (2.5mm).

### Example 2:

1Kg of linear polyethylene granules containing 1% blowing agent were coated with a high temperature resistive spray. The granules were 2mm in diameter and on average 8mm long. These were then added to 0.5Kg of polyethylene powder and placed inside a mould 300 x 300 x 330mm. The mould was clamped shut and heated in an oven at 300°C. The process was again stopped at 205°C internal temperature.

During the process, powdered material formed a solid skin on the outside of the part (adjacent to the mould) and the coated granular material formed a foamed inner layer. This produced a hollow cavity within a solid skin (approximately 1mm) and a foamed lining (approximately 6mm).

It will be appreciated that the above embodiment has been described by way of example only and that many variations are possible without departing from the scope of the invention.

## Claims

1. A method of rotational moulding in which a granular moulding material is mixed with another moulding material and moulded together in a rotational mould (1) whereby during moulding the materials are separated into different but adjacent layers characterised by the steps of coating the granules of the granular moulding material, prior to mixing with the second moulding material, whereby during moulding the coating promotes separation between the granular moulding material and the other moulding material to form the different but adjacent layers (3,4), the coating being absorbed in the materials during moulding.

2. A method as claimed in claim 1, in which the second moulding material is in powdered form(3).

3. A method as claimed in claim 1 or 2, in which the granular moulding material (4)is foamable.

4. A method as claimed in claim 3, in which the granular moulding material (4) is treated with a blowing agent to make it foamable.

5. A method as claimed in any preceding claim, in which one of the moulding materials is polymeric.

6. A method as claimed in any preceding claim, in which both of the moulding materials are polymeric.

7. A method as claimed in claim 5 or 6, in which the polymeric material is polyethylene, polypropylene or polyvinylchloride.

8. A method as claimed in any preceding claim, in which the granules are coated with an inorganic material.

9. A method as claimed in claim 8, in which the inorganic material is a ceramic dust, paint or high temperature barrier.

10. A method as claimed in claim 9, in which the ceramic dust is a 94% alumina material with an average particle size less than ten microns.

11. A moulded product produced by the method of any of claims 1 to 10.

## Patentansprüche

1. Verfahren zum Rotationsformen, bei dem ein körniges Gießmaterial mit einem weiteren Gießmaterial vermischt wird und diese zusammen in einer Rotationsform (1) vergossen werden, wodurch die Materialien während des Formens in verschiedene, jedoch aneinander angrenzende Lagen separiert werden, gekennzeichnet durch die Schritte des Beschichtens der Körner des körnigen Gießmaterials vor dem Mischen mit dem zweiten Gießmaterial, wodurch die Beschichtung die Separierung zwischen dem körnigen Gießmaterial und dem anderen Gießmaterial wahrend des Formens unterstützt, um die verschiedenen, jedoch aneinander angrenzenden Lagen (3, 4) zu bilden, wobei die Beschichtung wahrend des Formens in den Materialien absorbiert wird.

2. Verfahren wie in Anspruch 1 beansprucht, bei dem das zweite Gießmaterial in Pulverform (3) vorliegt.

3. Verfahren wie in Anspruch 1 oder 2 beansprucht, bei dem das körnige Gießmaterial (4) schäumbar ist.

4. Verfahren wie in Anspruch 3 beansprucht, bei dem das körnige Gießmaterial (4) mit einem Treibmittel behandelt wird, um es schäumbar zu machen.

5. Verfahren wie in irgendeinem vorausgehenden Anspruch beansprucht, bei dem eines der Gießmaterialien ein Polymer ist.

6. Verfahren wie in irgendeinem vorausgehenden Anspruch beansprucht, bei dem beide der Gießmaterialien Polymere sind.

7. Verfahren wie in Anspruch 5 oder 6 beansprucht, bei dem das polymere Material Polyethylen, Polypropylen oder Polyvinylchlorid ist.

8. Verfahren wie in irgendeinem vorausgehenden Anspruch beansprucht, bei dem die Körner mit einem anorganischen Material beschichtet werden.

9. Verfahren wie in Anspruch 8 beansprucht, bei dem das anorganische Material ein keramischer Staub, Farbe oder ein Hochtemperatur-Sperrstoff ist.

10. Verfahren wie in Anspruch 9 beansprucht, bei dem der keramische Staub ein 94%iges Aluminiummaterial mit einer durchschnittlichen Partikelgröße von weniger als 10 Mikron ist.

11. Ein durch das Verfahren nach einem der Ansprüche 1 bis 10 hergestelltes Formerzeugnis.

## Revendications

1. Procédé de moulage rotatif, dans lequel un matériau de moulage granulaire est mélangé à un autre matériau de moulage et ils sont moulés conjointement, dans un moule rotatif (1), de manière que, durant le moulage les matériaux soient séparés en des couches différentes mais adjacentes, caractérisé par les étapes consistant à revêtir les granulés du matériau du moulage granulaire, ayant d'effectuer le mélange avec le deuxième matériau de moulage, de manière que, durant le moulage, le revêtement favorise la séparation entre le matériau de moulage granulaire et l'autre matériau de moulage, afin de former les couches (3, 4) différentes, mais adjacentes, le revêtement étant absorbé dans les matériaux durant le moulage.

2. Procédé selon la revendication 1, dans lequel le deuxième matériau de moulage se présente sous une forme pulvérulente (3).

3. Procédé selon la revendication 1 ou 2, dans lequel le matériau de moulage granulaire (4) peut être mis sous forme alvéolaire.

4. Procédé selon la revendication 3, dans lequel le matériau de moulage granulaire (4) est traité avec un agent soufflant pour le rendre alvéolaire.

5. Procédé selon l'une quelconque des revendications précédentes, dans lequel l'un des matériaux de moulage est de nature polymère.

6. Procédé selon l'une quelconque des revendications précédentes, dans lequel les deux matériaux de moulage sont de nature polymère.

7. Procédé selon la revendication 5 ou 6, dans lequel le matériau polymère est du polyéthylène, du polypropylène ou du polychlorure de vinyle.

8. Procédé selon l'une quelconque des revendications précédentes, dans lequel les granulés sont revêtus d'un matériau non-organique.

9. Procédé selon la revendication 8, dans lequel le matériau non-organique est de la poussière de céramique, de la peinture ou un élément formant barrière aux hautes températures.

10. Procédé selon la revendication 9, dans lequel la poussière de céramique est un matériau constitué à 94 % d'alumine, avec une taille de particule moyenne inférieure à 10 microns.

11. Produit moulé ayant été produit par le procédé selon l'une quelconque des revendications 1 à 10.
